# EUROPEAN PATENT SPECIFICATION

(11) **EP 4 536 462 B1**
(45) Date of publication and mention of the grant of the patent: **10.09.2025**
(21) Application number: 23751059.9
(22) Date of filing: 19.07.2023
(51) Int. Cl.: B29C 45/26, B29D 11/00, B29C 33/30

(54) **METHOD AND APPARATUS RELATING TO MANUFACTURE OF MOLD HALVES FOR FORMING CONTACT LENSES**
VERFAHREN UND VORRICHTUNG ZUR HERSTELLUNG VON FORMHÄLFTEN FÜR DIE FORMUNG VON KONTAKTLINSEN
MÉTHODE ET APPAREIL POUR LA FABRICATION DE MOITIÉS DE MOULES POUR LA FORMATION DE LENTILLES DE CONTACT

(30) Priority: 22.07.2022 US 202263391332 P
(43) Date of publication of application: 16.04.2025
(73) Proprietor: CooperVision International Limited, Fareham PO15 5RL (GB)
(72) Inventor: GIBSON, John Robert, Eastleigh, Hampshire SO53 4LY (GB)
(74) Representative: Abel & Imray LLP
(86) International application number: PCT/GB2023/051901
(87) International publication number: WO 2024/018208

(56) References cited:
- EP-A2- 0 686 486
- EP-A2- 1 052 075
- US-A- 3 982 869
- US-A1- 2018 056 558

## Description

### FIELD

The present disclosure relates to the field of contact lens manufacture, using mold halves produced by injection molding. In particular, it relates to apparatus and methods for rapidly inspecting, replacing or exchanging tools in injection molding machines in order to manufacture said mold halves.

### BACKGROUND

Various methods of manufacturing contact lenses are known, including spin casting, lathing (for example, by diamond turning) and cast molding (for example, using injection molded mold halves). In particular, cast molding of contact lenses involves forming a pair of mold halves (i.e., a first mold half and a second mold half), placing a volume of a contact lens formulation on an optical quality surface of one of the two mold halves, and placing the two mold halves in contact with each other to form a contact lens mold assembly that has a contact lens-shaped cavity containing the contact lens formulation. The contact lens mold assembly is then exposed to conditions to cause the contact lens formulation to polymerize or cure in the contact lens mold assembly. Using high speed manufacturing lines, contact lenses can be manufactured in very large numbers, for example, tens of thousands each day. Increases in the rate of manufacture of contact lenses can be expected to bring down the cost of each lens. It is important, however, that increased rates of manufacture do not compromise the quality of the lenses produced.

When contact lenses are formed by cast molding using injection molded contact lens mold halves, the process includes many steps. For example, the process of producing the mold halves can include closing two injection molding tool halves provided in plates of an injection molding machine, forming the contact lens mold halves in the closed injection molding tool halves, opening the tool halves containing the injection molded mold halves, removing the injection molded mold halves from the opened tool halves and optionally transferring the newly formed mold halves to a transporter for further processing. As understood by persons skilled in the art, and as used herein, an injection molding tool half refers to the (usually metallic) inserts used to form curved surfaces of the contact lens mold halves. The inserts are typically provided in plates of an injection molding machine. One or both of the inserts, or tool halves, will have an optical quality surface used to form a lens-forming surface of a contact lens mold half.

The mold halves, and in particular the optical surfaces thereof, must be produced to high manufacturing tolerances. Accordingly, the tool halves used to mold them are usually subject to frequent inspection and are replaced or repaired at the first sign of wear or damage. In addition, the same injection molding machine is normally used to produce a range of shapes of mold halves, each shape of mold half producing a contact lens of corresponding shape (and thus optical characteristics). Conventionally, the tool halves are changed by discontinuing use of the injection molding machine, changing out the tool halves (for instance using a robotic arm) and then recommencing use of the machine. The machine down-time necessary to change over the tools can add considerably to the overall production costs of mold halves, and thus the contact lenses produced therewith.

Prior art: Document EP 0686486 A2 discloses an apparatus for injection molding of contact lens mold halves according to the preamble of claim 1.

It is an object of the invention to mitigate or obviate one of the aforesaid disadvantages, and/or to provide an improved or alternative apparatus or part of apparatus for injection molding of mold halves, method for injection molding mold halves, mold half for manufacturing a contact lens, method for manufacturing a contact lens, or contact lens.

### SUMMARY

According to a first aspect of the present disclosure there is provided an apparatus for injection molding of mold halves for use in the manufacture of contact lenses, the apparatus comprising one or more first tool halves mounted on a first support, and one or more second tool halves releasably mounted on a second support. With the second support in an operative orientation, the first and second supports are movable between a closed position in which the first and second tool halves engage one another to provide corresponding mold cavities therebetween, and an open position in which the first and second tool halves are aligned with one another across a part removal gap. The second support is movable between the operative orientation, and a reloading orientation in which the second tool halves are located in a tool change area that is out of alignment with the first tool halves.

According to a second aspect of the present disclosure there is provided a part of an apparatus according to the first aspect of the disclosure, said part comprising the first support, the second support, and a drive mechanism for moving the first and second supports between the open and closed positions and moving the second support between said orientations.

According to a third aspect of the present disclosure there is provided a method of injection molding mold halves for use in the manufacture of contact lenses. The method comprises moving a second support to an operative orientation, and then moving a first support and the second support to a closed position such that one or more first tool halves supported on the first support and one or more second tool halves releasably supported on the second support engage one another to provide corresponding mold cavities therebetween. The method further comprises injecting molten polymer into the mold cavities, then allowing the polymer to solidify in the mold cavities and form mold halves. Further, the method comprises moving the first and second supports to an open position such that the first and second tool halves are aligned with one another across a part removal gap. The method also comprises removing said mold halves through the part removal gap. In addition, the method comprises moving the second support to a reloading orientation in which the second tool halves are located in a tool change area which is out of alignment with the first tool halves. The method further comprises removing the second tool halves from the second support.

According to a fourth aspect of the present disclosure there is provided a mold half for manufacturing a contact lens, injection molded using the apparatus of the first aspect of the disclosure and/or the method of the third aspect of the disclosure.

According to a fifth aspect of the present disclosure there is provided a method of manufacturing a contact lens. The method comprises injection molding a male mold half and injection molding a female mold half, at least one of said mold halves being a mold half according to the fourth aspect of the disclosure. The method further comprises engaging the male and female mold halves with one another, with a quantity of a contact lens formulation located in a cavity defined therebetween. The method further comprises curing the contact lens formulation to form said contact lens. The method further comprises separating the male and female mold halves and removing the contact lens.

According to a sixth aspect of the present disclosure there is provided a contact lens manufactured using the method of the fifth aspect of the disclosure.

### BRIEF DESCRIPTION OF THE DRAWINGS

FIGS. 1A and 1B are a perspective and cross-sectional views of two mold halves for use in the production of a contact lens.
FIGS. 2A and 2B are perspective and cross-sectional views of the two mold halves of FIGS. 1A and 1B engaging one another to define a cavity therebetween.
FIG. 3 is a cross-sectional view through a pair of tool halves used to produce the male mold half of FIGS. 1A to 2B.
FIG. 4 is a cross-sectional view through a pair of tool halves used to produce the female mold half of FIGS. 1A to 2B.
FIG. 5 is a perspective view of an apparatus for injection molding the mold halves of FIGS. 1A to 2B, using the pairs of tool halves shown in FIGS. 3 and 4.
FIG. 6 is a perspective view of the apparatus of FIG. 5, with a divider removed.
FIG. 7 is a cross-sectional view of first and second supports of the apparatus of FIGS. 5 and 6.

### DETAILED DESCRIPTION

According to a first aspect of the present disclosure there is provided an apparatus for injection molding of mold halves for use in the manufacture of contact lenses, the apparatus comprising one or more first tool halves mounted on a first support, and one or more second tool halves releasably mounted on a second support, wherein:
with the second support in an operative orientation, the first and second supports are movable between a closed position in which the first and second tool halves engage one another to provide corresponding mold cavities therebetween, and an open position in which the first and second tool halves are aligned with one another across a part removal gap; and
the second support is movable between the operative orientation, and a reloading orientation in which the second tool halves are located in a tool change area that is out of alignment with the first tool halves.

The second support being movable between the operative and reloading orientations, thereby moving the second tool halves between alignment with the first tool halves and non-alignment with the first tool halves in the tool change area, can allow the second tool halves to be removed from and/or attached to the second support easily. For instance, the tool change area can be a location more accessible to a worker or robot tasked with removal of the second tool halves from the second support (e.g. for inspection, repair or replacement) and/or attachment of the second tool halves to the second support (e.g. after said inspection, repair or replacement). This ease of access can translate to reduced downtime, and therefore to reduced overall cost of production for a given number of mold halves.

For the avoidance of doubt, reference to the first and second supports moving between the open and closed positions is intended to refer to them moving relative to one another. Accordingly, when moving between positions the first support may move relative to a stationary second support, the second support may move relative to a stationary first support, or both first and second supports may move. Embodiments where the second support remains stationary when the first and second supports move between positions may be beneficial in that the mechanism required may be simpler than if the second plate had to be movable both between said orientations, and also movable to move the supports between positions.

The supports may be movable between said open and closed positions along an upright axis.

This may reduce the 'footprint' of the apparatus (i.e. floor-space taken up by the apparatus), in comparison to an arrangement where the supports move between positions along a horizontal axis, for example. Instead or as well, it may allow gravity to assist with removal of the second tool halves from the second support and/or attachment of the second tool halves to the second support.

The apparatus may further comprise one or more third tool halves releasably mounted on the second support, wherein with the second support in the reloading orientation the first and second supports are movable between a further closed position in which the first and third tool halves engage one another to provide corresponding mold cavities therebetween, and a further open position in which the first and third tool halves are aligned with one another across a part removal gap.

This can allow the apparatus to continue injection molding mold halves, using the first tool halves and the third tool halves, while the second tool halves are in the tool change area (for instance being removed from or attached to the second support).

As an alternative, the apparatus may comprise no other tool halves save for the first tool halves and second tool halves. **In** such an arrangement, with the second support in the reloading orientation a blank area of the second support may be located in alignment with the first tool halves. Such a blank area may further be located in the tool change area when the second support is in the operative orientation.

Where the apparatus comprises third tool halves, the third tool halves may be substantially the same shape as the second tool halves (whereupon mold halves produced using the first and second tool halves would be substantially the same shape as mold halves produced using the first and third mold halves), or may have a different shape to the second tool halves (whereupon mold halves produced using the first and second tool halves would have a different shape to those produced using the first and third mold halves).

With the second support in the operative orientation, the third tool halves may be located in the tool change area.

This can allow the apparatus to continue injection molding mold halves, using the first tool halves and the second tool halves, while the third tool halves are in the tool change area (for instance being removed from or attached to the second support). **In** other words, the machine can be run using the first and second tool halves while removing or attaching the third tool halves, and can also be run using the first and third tool halves while removing or attaching the second tool halves.

As an alternative, with the second support in the operative orientation the third tool halves may be located outside the tool change area, for instance in an intermediate location between the tool change area and the location in which they would be aligned with the first tool halves. **In** such an arrangement, the second support may be movable to a further orientation in which the third tool halves are located in the tool change area.

The apparatus may further comprise one or more fourth tool halves releasably supported on the second support.

This may improve the versatility of the apparatus. For instance where the second, third and fourth tool halves are of different shapes to one another, the apparatus may be capable of producing mold halves of three different shapes simply by moving the support between orientations.

With the second support in the operative orientation, the fourth mold halves may also be located in the tool change area. The fourth tool halves can therefore be accessible while mold halves are being produced using the first and second tool halves, in a similar manner as described above in relation to the third tool halves.

The supports may be movable between the open and closed positions by moving them along a molding axis (the molding axis can be understood to refer to an axis along which the mold halves are moved to contact each other to form a mold assembly), and the second support may be movable between the operative and reloading orientations in a direction normal to the molding axis. For instance, the second support may be rotatable between the operative and reloading orientations about an axis which is parallel to the molding axis.

This can allow the mechanism used to move the second support between orientations to be advantageously simple and/or robust, in comparison to an arrangement where the second support moves in a direction with a component parallel to the molding axis (such as an arrangement where the second support has a shape akin to an escalator, where each 'step' supports a different set of tool halves).

The second tool half or each second tool half may be configured to form an optical surface of said mold half.

The optical surfaces being provided on the second tool halves, which may be advantageously easy to remove/attach as outlined above, may be of particular benefit since the tool halves which provide the optical surfaces are particularly likely to need to be removed for inspection (since the optical surface forms a surface of the mold half which will then form a surface of the finished contact lens) or to be replaced with different tool halves (since different mold halves usually need different optical surfaces but may have the same shape on the reverse).

The apparatus may further comprise one or more alternative tool halves which are configured to be releasably mounted on the second support in place of the second tool halves.

The apparatus being able to use alternative tool halves in place of the second tool halves can increase the versatility of the apparatus, allowing some mold halves to be produced using the first and second tool halves (and/or first and third tool halves and/or first and fourth tool halves, where present), and different mold halves to be produced using the first tool halves and the alternative tool halves.

As an alternative, the apparatus may be configured to function using only the first tool halves and second tool halves (and third and fourth tool halves, where present) only, with individual tool halves being removed and replaced for inspection or repair when necessary.

According to a second aspect of the present disclosure there is provided a part of an apparatus according to the first aspect of the disclosure, said part comprising the first support, the second support, and a drive mechanism for moving the first and second supports between the open and closed positions and moving the second support between said orientations.

The part may be used to manufacture an apparatus according to the first aspect of the disclosure, thereby providing one or more of the benefits discussed above.

The drive mechanism may comprise an electric, hydraulic or pneumatic motor. Such a motor may be arranged to move the second support between said orientations. Where the drive mechanism comprises such a motor it may further comprise a transmission such as a chain drive, belt drive or gearbox driven by that motor.

Instead, or as well, the drive mechanism may comprise a pneumatic cylinder, a hydraulic cylinder, a solenoid and/or or an electric linear actuator. The drive mechanism may comprise more than one of said components, for instance two, three, four or more. Said component or components may be arranged to move the first and second plates between the open and closed positions.

According to a third aspect of the present disclosure there is provided a method of injection molding mold halves for use in the manufacture of contact lenses, the method comprising:
moving a second support to an operative orientation, and then moving a first support and the second support to a closed position such that one or more first tool halves supported on the first support and one or more second tool halves releasably supported on the second support engage one another to provide corresponding mold cavities therebetween;
injecting molten polymer or molten plastic into the mold cavities, then allowing the polymer or plastic to solidify in the mold cavities and form mold halves;
moving the first and second supports to an open position such that the first and second tool halves are aligned with one another across a part removal gap;
removing said mold halves through the part removal gap;
moving the second support to a reloading orientation in which the second tool halves are located in a tool change area which is out of alignment with the first tool halves; and
removing the second tool halves from the second support.

Moving the second support between the operative and reloading orientations, thereby moving the second tool halves between alignment with the first tool halves and non-alignment with the first tool halves in the tool change area, can allow the step of removing the second tool halves, and or a step of (re-)attaching second tool halves, to be performed with advantageous ease. For instance, the tool change area can be a location more accessible to a worker or robot tasked with removal of the second tool halves (e.g. for inspection, repair or replacement) and/or (re)attachment of the second tool halves to the second support (e.g. after said inspection, repair or replacement). This ease of access can translate to reduce downtime, and therefore to reduced overall cost of production for a given number of mold halves.

The method may use the apparatus according to the first aspect of the disclosure.

Moving the supports to the closed position and moving them to the open position may each comprise moving the supports along an upright axis.

The first and second supports being movable along an upright axis may reduce the 'footprint' of the apparatus (i.e. floor-space taken up by the apparatus), in comparison to an arrangement where the supports move between positions along a horizontal axis, for example. Instead or as well, it may allow gravity to assist with removal of the second tool halves from the second support and/or attachment of the second tool halves to the second support.

The step of moving the second support to the reloading orientation may also move one or more third tool halves, which are also releasably supported by the second support, into alignment with the first tool halves, and the method may further comprise:
moving the first and second supports to a further closed position, with the second support in the reloading orientation, such that the first tool halves and the third tool halves engage one another to provide corresponding mold cavities therebetween;
injecting molten polymer or plastic into the mold cavities, then allowing the polymer or plastic to solidify in the mold cavities and form additional mold halves;
moving the first and second supports to a further open position such that the first and third tool halves are aligned with one another across a part removal gap; and
removing said additional mold halves through the part removal gap.

This can allow the apparatus to continue injection molding mold halves, using the first tool halves and the third tool halves, while the second tool halves are in the tool change area (for instance being removed from or attached to the second support).

As an alternative, the apparatus may comprise no other tool halves save for the first tool halves and second tool halves. **In** such an arrangement, moving the second support to the reloading orientation may move a blank area of the second support into alignment with the first tool halves. Such a blank area may further be moved to the tool change area when the second support is moved to the operative orientation.

Moving the second support to the operative orientation may also move the third tool halves to the tool change area.

This can allow the apparatus to continue injection molding mold halves, using the first tool halves and the second tool halves, while the third tool halves are in the tool change area (for instance being removed from or attached to the second support). **In** other words, the machine can be run using the first and second tool halves while removing or attaching the third tool halves, and can also be run using the first and third tool halves while removing or attaching the second tool halves.

As an alternative, moving the second support to the operative orientation may move the third tool halves to a location outside the tool change area, for instance in an intermediate location between the tool change area and the location in which they would be aligned with the first tool halves. Such a method may further comprise a step of moving the second support to a further orientation in which the third tool halves are located in the tool change area.

The step of moving the second support to the operative orientation may also move one or more fourth tool halves, which are also releasably supported by the second support, into the tool change area.

This may improve the versatility of the apparatus. For instance where the second, third and fourth tool halves are of different shapes to one another, the apparatus may be capable of producing mold halves of three different shapes simply by moving the support between orientations.

The step of moving the second support to the operative orientation may also move the fourth mold halves to the tool change area. The fourth tool halves can therefore be accessible while mold halves are being produced using the first and second tool halves, in a similar manner as described above in relation to the third tool halves.

Optionally:
moving the first and second supports to the closed position and moving them to the open position each comprises moving them along a molding axis; and
moving the second support to the operative orientation and moving it to the reloading orientation each comprises moving it in a direction normal to the molding axis, for example rotating it about an axis which is parallel with (for instance collinear with) the molding axis.

This can allow the mechanism used to move the second support between orientations to be advantageously simple and/or robust, in comparison to an arrangement where the second support moves in a direction with a component parallel to the molding axis (such as an arrangement where the second support has a shape akin to an escalator, where each 'step' supports a different set of tool halves).

Optionally:
moving the first and second supports to the closed position and moving them to the open position each comprises moving them along a molding axis; and
moving the second support to the operative orientation and moving it to the reloading orientation each comprises rotating it about an axis which is parallel to the molding axis.

The step of allowing the polymer or plastic to solidify in the mold cavities and form mold halves may comprise allowing some of said polymer or plastic to solidify against optical surfaces provided by said second tool halves so as to form optical surfaces of said mold halves.

The optical surfaces being provided on the second tool halves, which may be advantageously easy to remove/attach as outlined above, may be of particular benefit since the tool halves which provide the optical surfaces are particularly likely to need to be removed for inspection (since the optical surface forms a surface of the mold half which will then form a surface of the finished contact lens) or to be replaced with different tool halves (since different mold halves usually need different optical surfaces but may have the same shape on the reverse).

The method may further comprise attaching second tool halves to the second support, for instance re-mounting second tool halves previously removed from the second support, or attaching replacements of one or more of the second tool halves (for instance where a second tool half has become worn or damaged). As an alternative, the method may further comprise the step of replacing the second tool halves removed from the second support with one or more alternative tool halves.

The apparatus being able to use alternative tool halves in place of the second tool halves can increase the versatility of the apparatus, allowing some mold halves to be produced using the first and second tool halves (and/or first and third tool halves and/or first and fourth tool halves, where present), and different mold halves to be produced using the first tool halves and the alternative tool halves.

As an alternative, the apparatus may be configured to function using only the first tool halves and second tool halves (and third and fourth tool halves, where present) only, with individual tool halves being removed and replaced for inspection or repair when necessary.

According to a fourth aspect of the present disclosure there is provided a mold half for manufacturing a contact lens, injection molded using the apparatus of the first aspect of the disclosure and/or the method of the second aspect of the disclosure.

A mold half so produced may be cheaper to produce, for instance due to reduced downtime as discussed above.

According to a fifth aspect of the present disclosure there is provided method of manufacturing a contact lens, the method comprising:
injection molding a male mold half and injection molding a female mold half, at least one of said mold halves being a mold half according to the fourth aspect of the disclosure;
engaging the male and female mold halves with one another, with a quantity of a contact lens formulation located in a cavity defined therebetween;
curing the contact lens formulation to form said contact lens; and
   separating the male and female mold halves and removing the contact lens.

It can be understood that the curing of the contact lens formulation takes place by polymerization.

The method using mold halves according to the fourth aspect of the disclosure may reduce the cost associated with that mold half for the reasons given above, thereby reducing the cost of production of said contact lens.

The method may comprise further steps, for instance washing or rinsing the contact lens and/or hydrating the contact lens.

According to a sixth aspect of the present disclosure there is provided a contact lens manufactured using the method of the fifth aspect of the disclosure.

Such a contact lens may be cheaper to produce for the reasons given above.

The skilled person will understand that specific features of embodiments of the disclosure described herein that are not incompatible with each other can be present in in any combination in example embodiments of the disclosure. Optional or preferred features described in relation to one aspect of the disclosure may be applicable to other aspects of the disclosure, where appropriate.

Herein, reference is made to mold halves, but it is to be understood that, although two mold halves may complement each other and together form a mold assembly, each mold half is not necessarily half of, or 50% of, the mold assembly. One mold half can comprise 20%, 30%, 40%, 45%, or the like, of a mold assembly while the other mold half can comprise 80%, 70%, 60%, 55%, or the like, of the mold assembly. Accordingly, while the two mold halves can make one whole mold assembly, it is to be understood that the two mold halves neither have to be of the same size nor do they have to be mirror images of one another. Similarly, while reference is made herein to tool halves, it is to be understood that two tool halves, that complement each other and together define a mold cavity, do not have to be of the same size or mirror images of one another.

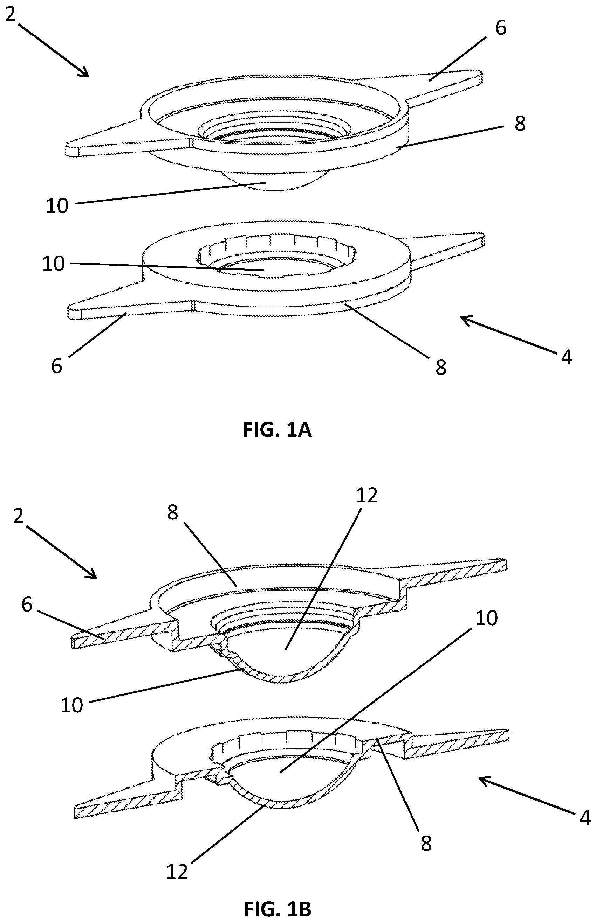

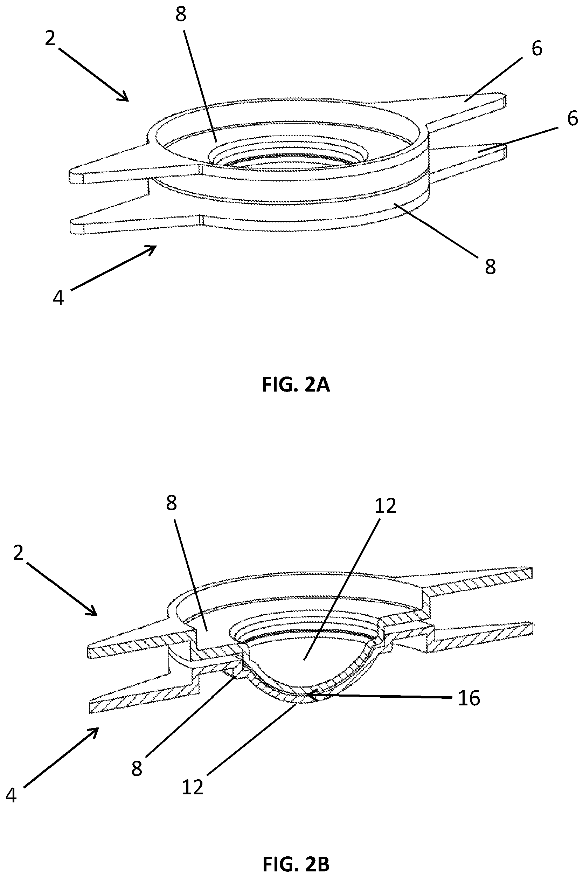

With reference to the drawings, FIGS. 1A and 1B (as well as FIGS. 2A and 2B) show to mold halves, a male mold half 2 and a female mold half 4, for use in the manufacture of a contact lens. Each mold half 2, 4 has alignment tabs 6, a rim portion 8, an optical surface 10 and a non-optical surface 12. The optical surface 10 of the male mold half 2 is convex and its non-optical surface 12 is concave, whereas the optical surface 10 of the female mold half 4 is concave and its non-optical surface 12 is convex.

The male and female mold halves 2, 4 can engage with one another as shown in FIGS. 2A and 2B. With the mold halves 2, 4 so engaged, they seal against one another and the convex optical surface 10 of the male mold half 2 projects into the concave optical surface 10 of the female mold half 4. The two optical surfaces 10 thereby form a cavity 16 within which a contact lens can be molded.

To manufacture a contact lens using the mold halves 2, 4 a quantity of a contact lens formulation is placed into or onto the concave optical surface 10 of the female mold half 4, and the male and female mold halves 2, 4 are then engaged with one another. As the mold halves 2, 4 are engaged, the contact lens formulation is spread out and substantially fills the cavity 16. The mold halves 2, 4 containing the contact lens formulation are then treated, for instance using heat or UV light, to cure the formulation into a polymer contact lens. The mold halves 2, 4 can then be separated to release the contact lens, which is then washed to remove any residual chemicals that do not form part of the polymerized contact lens, such as unreacted monomer and the like. The lens is then hydrated, and packaged ready for use.

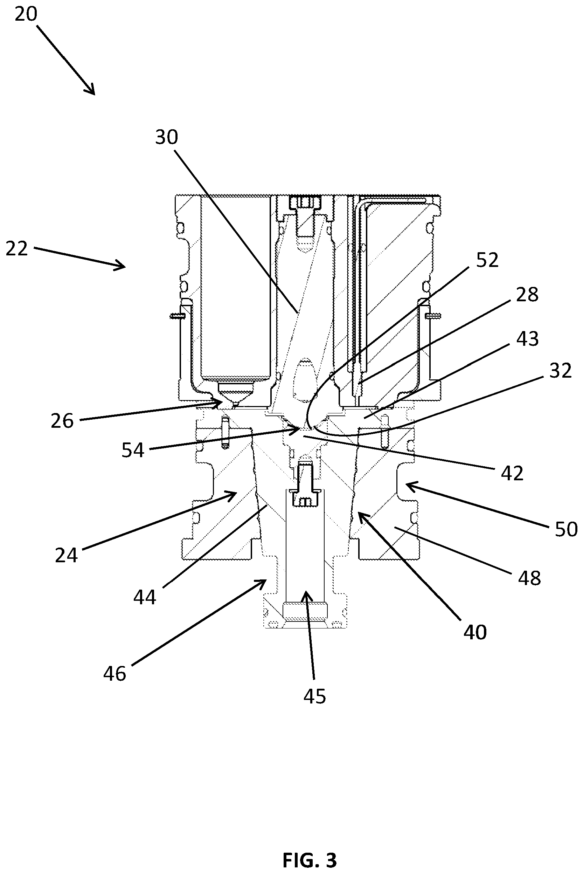

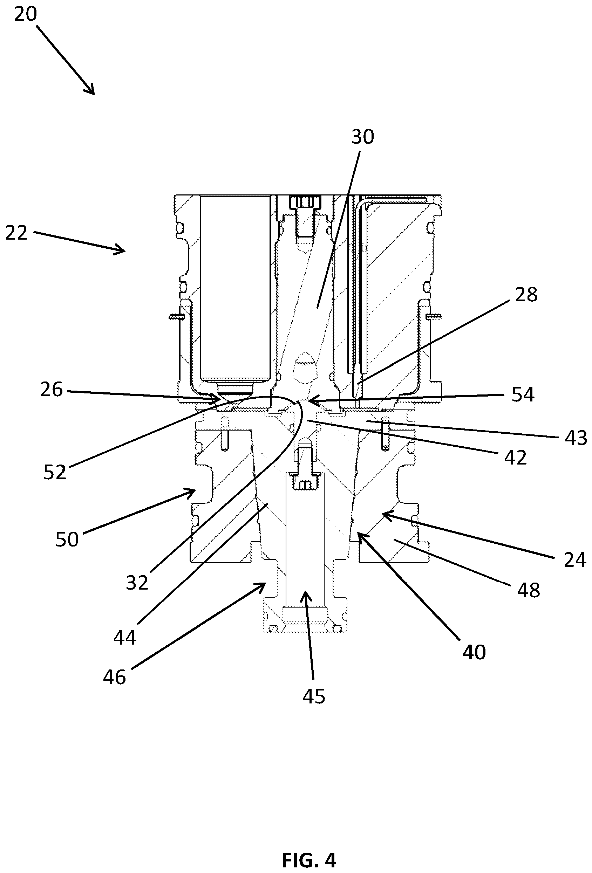

The mold halves 2, 4 are each produced by injection molding into a cavity formed between a pair of tool halves. FIG. 3 shows the pair 20 of tool halves used to produce the male mold half 2, and FIG. 4 shows the pair 20 of tool halves used to produce the female mold half 4. Each pair comprises a first tool half 22 and a second tool half 24.

Each first tool half 22 includes an injection nozzle 26, a thermocouple 28, a tool portion 30, and an ejection mechanism (not visible) arranged to eject formed mold halves. Coolant flow passages (not visible) are provided behind tool portion 30, passing approximately 4 mm from its outermost surface 32 at their closest approach. The injection nozzles 26 and thermocouples 28 of the first tool halves 22 are located away from the centers of tool portions 30. This makes room for the coolant passages to pass close to the outer surface 32 of the tool portion 30, where the surface of the contact lens mold half used to cast-mold the optic zone of a contact lens is formed.

Each second tool half 24 of this example takes the form of a collet 40 carrying a tool insert 42. Each collet 40 has a front disc portion 43 and a frustoconical body portion 44. Frustoconical body portion 44 has a coolant passage 45 down its centre, up to the rear of the tool insert 42 and back, and includes toward its rear an annular groove 46. As discussed in more detail later, each second tool half 24 is supportable on a second support. More particularly, in this example each second tool half 24 is supportable in a respective bushing 48 of the second support. The bushings 48 in this example also have coolant passages 50 running around them.

The first tool halves 22 can be clamped in place in the bushings 48, and thus attached to the second support, by respective clamps (not shown) which engage the grooves 46 of the collets 40 to prevent withdrawal of the frustoconical body portions 44 from the bushings 48. Each second tool half 24 can be unclamped, removed, and replaced independently of other second tool halves, enabling flexible interchange of second tool halves 24. Furthermore, each collet 40 can carry a different tool insert 42.

The second tool half 24 of each pair 20 provides an optical surface 52. In the case of the second tool half 24 of FIG. 3, the optical surface 52 of the second tool half is concave and defines the convex optical surface 10 of the male mold half 2. In the case of the second tool half 24 of FIG. 4, the optical surface 52 of the second tool half is convex and defines the concave optical surface 10 of the female mold half 4. In each case, in this example the optical surfaces 52 of the second tool halves 24 are provided on the tool inserts 42. The shapes of the optical surfaces 52 of the second tool halves 24, and thus the shapes of the optical surfaces 10 of the mold halves 2, 4 (and therefore the shape and optical properties of a contact lens produced therewith) can therefore be changed by changing the tool inserts 42 of the second tool halves 24.

In the first tool half 22 of each pair 20, the outermost surface 32 of the tool portion 30 provides a surface of complementary shape to the optical surface 52 of the associated second tool half 24. Thus, the outermost surface 32 of the tool portion 30 of the first tool half 22 in FIG. 3 is convex, and the outermost surface 32 of the tool portion 30 of the first tool half 22 in FIG. 4 is concave. Since these surfaces do not form surfaces of the mold halves 2, 4 which form surfaces of the contact lens, their precise shapes are less crucial. Accordingly, the same first tool half 22 may be used with a plurality of different second tool halves (e.g. with a plurality of different tool inserts 42 fitted to the same collets 40, and/or with a plurality of different sets of collets 40 each with different tool inserts 42).

FIGS. 3 and 4 show the pairs 20 of tool halves 22, 24 engaged with one another. So engaged, the first and second tool halves 22, 24 form mold cavities 54 into which molten polymer or plastic can be injected (through the injection nozzles 26) and allowed to cool to form the respective mold halves 2, 4.

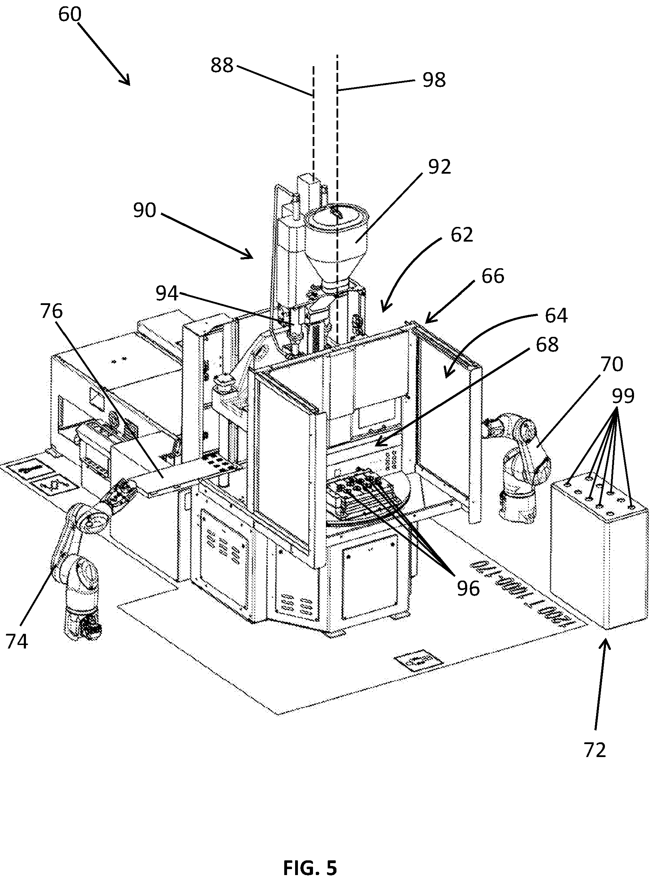

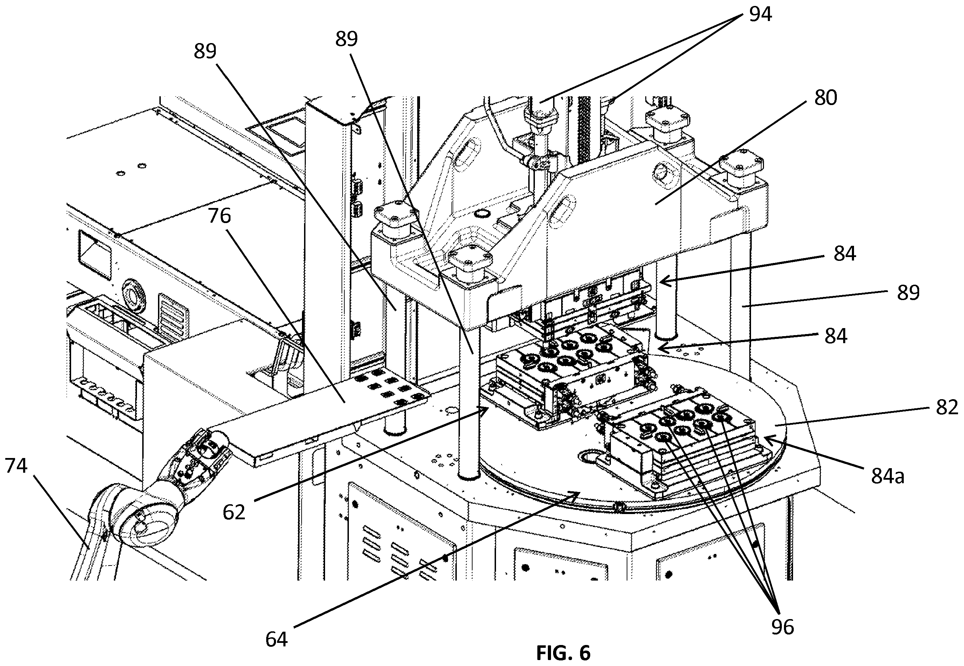

FIG. 5 shows an example of an apparatus 60 for injection molding mold halves which utilizes first and second tool halves 22, 24 as described above. The apparatus includes an injection molding area 62 and a tool change area 64, separated from one another by a divider 66 which includes a sliding door 68. The apparatus 60 also includes a tool exchange robot 70, a tool store 72, and a take-off robot 74 with plate 76. Further, as shown in FIG. 6, the apparatus comprises a first support 80 and a second support 82.

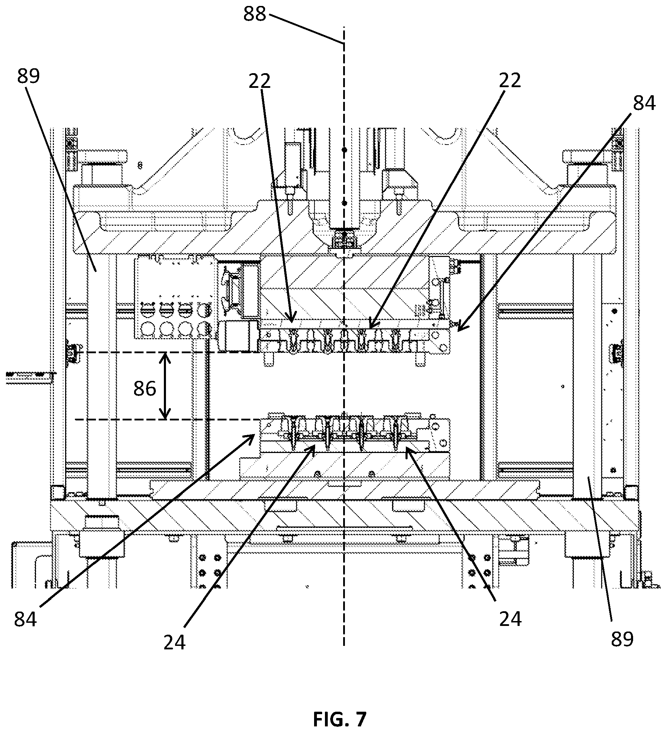

FIG. 6 shows the apparatus 60 with the divider 66 removed, showing the first and second supports 80, 82 more clearly, and FIG. 7 shows a cross-section of this area. Mounted to the first support 80 are a set of first tool halves 22 of the type shown in FIGS. 3 and 4. Mounted to the second support 82, more particularly removably mounted as discussed below, are a set of second tool halves 24 of the type shown in FIGS. 3 and 4. In this specific example the first support 80 has four first tool halves 22 of the type shown in FIG. 3 and four first tool halves 22 of the type shown in FIG. 4. Similarly, the second support 82 has four second tool halves 24 of the type shown in FIG. 3 and four second tool halves 24 of the type shown in FIG. 4. The first and second supports 80, 82 hold the first and second tool halves 22, 24 in respective mounting plate assemblies 84. The same component numbers in FIGS. 5-7 refer to the same components as described herein.

FIGS. 5 to 7 show the second support 82 in an operative orientation. With the second support 82 in this orientation, the first and second supports 80, 82 are movable relative to one another between an open position (as shown in FIGS. 5 to 7) and a closed position. With the supports 80, 82 in the open position the first and second tool halves 22, 24 are aligned with one another across a part removal gap 86. With the supports 80, 82 in the closed position, the aligned first and second tool halves 22, 24 engage one another in the manner shown in FIGS 3 and 4.

**In** this example, the supports 80, 82 are movable between the open and closed positions by moving the first support 80 along a vertically-aligned molding axis 88, guided by a set of guide rods 89 which run parallel to the molding axis 88. The first support is mounted to a stationary feed unit 90, which also supports a hopper 92 holding polymer or plastic granules to be injection molded, by a pair of hydraulic cylinders 94 of a drive mechanism of the apparatus. To move the first support 80 to the closed position, the cylinders 94 are extended to lower the first support 80 down along the molding axis 88 towards the second support 82, and to move the first support 80 to the open position, the cylinders 94 are retracted to lift the first support 80 up along the molding axis 88 away from the second support 82.

**In** this example, the second support 82 also has a set of third tool halves 96 removably mounted thereon in another mounting plate assembly 84a. The third tool halves 96 are generally the same as the first tool halves 22, except that the tool inserts 42 are of slightly different shapes such that the mold halves 2, 4 produced thereby also have slightly different shapes. Accordingly, the contact lenses produced using those mold halves 2, 4 would also have a slightly different shape and thus slightly different optical properties. With the second support 82 in the operative orientation, as illustrated, the third tool halves are located in the tool change area.

The second support 82 is movable between the operative orientation and a reloading orientation. More particularly, in this example the second support forms a turntable which can rotate under action of an electric motor (not visible) of a drive mechanism of the apparatus 60. The second support 82 is rotatable about an axis 98 which in this example is parallel to the molding axis 88. The sliding door 68 in the divider 66 can be lifted when the second support 82 is to be rotated, providing sufficient clearance for the plate assemblies 84 to pass under the divider 66.

With the second support 82 in the reloading orientation, the second tool halves 24 are positioned in the tool change area, i.e., out of alignment with the first tool halves 22, and the third tool halves 96 are positioned in the injection molding area 62 in alignment with the first tool halves 22. The second tool halves 24 being in the tool change area 64 makes them more accessible. **In** this example the tool change robot 70 is configured to remove the second tool halves 24 from the second support 82 and place them in the tool store 72, then replace the second tool halves 24 with a set of alternative tool halves 99 previously stored in the tool store 72. **In** other examples, however, no alternative tool halves 99 may be provided and the tool change robot may remove one second tool half 24 at a time, for instance for inspection or changing of its tool insert, before re-attaching it to the second support 82).

Just as moving the second support 82 from the operative orientation to the reloading orientation moves the second tool halves 24 from alignment with the first tool halves 22 to non-alignment with the first tool halves in the tool change area 64, it also moves the third tool halves 96 from the tool change area into alignment with the first tool halves 22 in the injection molding area 62. With the second support 82 in this position, the first and second supports 80, 82 are movable between a further open position in which the first and third tool halves 22, 96 are aligned with one another across a part removal gap, and a closed position in which the first and third tool halves 22, 96 engage one another in the same manner as described above in relation to the first and second tool halves 22, 24.

Accordingly, with the second support 82 in the reloading orientation, the apparatus 60 can continue making mold halves 2, 4 while the second tool halves 24 are being removed for inspection or replacement. Thus, the only machine down time required for the second tool halves 24 to be inspected/replaced is the time taken for the drive mechanism of the apparatus 60 to rotate the second support 82 from the operative orientation to the reloading orientation (which in this example is around four seconds).

**In** corresponding fashion, when the second support 82 is in the operative orientation, i.e. the second tool halves 24 are aligned with the first tool halves 22 in the injection molding area and the third tool halves 96 are in the tool change area 64, the tool exchange robot 70 can remove the third tool halves 96 for inspection or replacement.

To injection mold the mold halves 2, 4, the second support 82 is moved to the operative orientation and the first and second supports 80, 82 are moved to the closed position so that the first and second tool halves 22, 24 define mold cavities 54 as described above. Polymer or plastic pellets from the hopper 92 are heated beyond their melting point and the resultant liquid polymer/plastic flows into a manifold (not visible) and then into the cavities 54 through the injection nozzles 26 of the first tool halves 22 (see FIGS. 3 and 4). Further heating is provided by a coil (not visible) around each injection nozzle 26. Thermocouples 28, arranged on the opposite sides of the first tool halves 22 from the injection nozzles 26, are used to monitor the temperature of the injected polymer/plastic. Heating of nozzles 26 is controlled to ensure that the liquid polymer/plastic is injected into each of the eight cavities 54 at the same temperature, and hence at the same flow rate. Non-constant flow rates result in stresses in the formed mold, which in turn result in deformations and inconsistencies in contact lenses formed from the molds, for example, different levels of fit, different radii, and hence, different powers. Careful control of pressure and cooling gives consistency and uniformity; in contrast, poor control can result in a need to stop injection, selectively, into cavities for which the flow rate has deviated too far from a target value.

Once the cavities 54 are full of polymer or plastic and a desired hold pressure profile applied, stopper pins (not shown) in the injection nozzles 26 are moved forward to shut off the injection nozzles 26 from the cavities 54, which stops the flow of polymer/plastic. Coolant, for example, water, is circulated through coolant passages 45, 50 to cool the polymer/plastic and thereby form the mold halves, with polymer/plastic solidifying against the optical surfaces 52 of the tool inserts 42 and forming the optical surfaces 10 of the mold halves 2, 4. The coolant passages 45, 50 in tool halves 22, 24 pass close to the outermost surfaces 32 of the tool portions and the optical surfaces 52 of the tool inserts 42. Such an arrangement provides direct cooling in the portions of the mold halves 2, 4 that form the optic zone of the lens as the mold halves 2, 4 form in the cavity (rapid cooling of nucleated material results in good quality, uniform molds; without nucleation, slower cooling in the middle of the material can result, forming bigger crystals in the middle of the material).

Once the polymer/plastic has solidified and the mold halves 2, 4 have therefore been formed, the hydraulic cylinders 94 lift the first support 80 to move the supports 80, 82 to the open position, separating the die halves 22, 24 and opening the cavities 54. The newly formed mold halves 2, 4 remain on the first tool halves 22 as the first support 80 is lifted. The take-off robot 74 then inserts the plate 76 into the part removal gap 86. The ejector mechanism (not visible) then pushes the mold halves 2, 4 off the first tool halves 22 so that they can be collected onto the plate 76 using high airflow vacuum. The take-off robot 74 then transports the mold halves 2, 4 on the plate out through the part removal gap 86 and away from the injection molding area 62 for further processing (such as further cooling, quality inspection, or immediate use in the manufacture of contact lenses as described above).

The above process can be followed to make further mold halves 2, 4. Whenever inspection or replacement of the second tool halves 24 is needed, or when it is desired to manufacture mold halves 2, 4 of the shape that will be produced by the third tool halves 96, the second support 82 is moved to the reloading orientation so as to place the second tool halves 24 in the tool change area 64 and the third tool halves 96 in alignment with the first tool halves 22. The tool exchange robot 70 can then remove the second tool halves 24 or replace them with alternative tool halves 99 as described above. While this is taking place, the apparatus can continue to injection mold further mold halves 2, 4 using the first and third tool halves 22, 96 using the same process above but moving the supports 80, 82 between the further open position and the further closed position.

Similarly, whenever inspection or replacement of the third tool halves 96 is needed, or when it is desired to manufacture mold halves 2, 4 of the shape that will be produced by the first tool halves 24 (or the alternative tool halves 99, where these have been placed onto the second support 82), the second support 82 is moved to the operative orientation so as to place the third tool halves 96 in the tool change area 64 and place the second tool halves 24 (or alternative tool halves 99) in alignment with the first tool halves 22.

**In** this example, production monitoring software logs whenever the set of tool halves 24, 96 being used in conjunction with the first tool halves 22 to manufacture mold halves 2, 4 is changed by changing the orientation of the second support 82. By doing so, the output of mold halves 2, 4 from the apparatus 60 can be managed autonomously. This can avoid the need for different batches of mold halves 2, 4, produced using different sets of mold halves 24, 96, to be segregated physically (for instance packaging them onto different containers for future processing).

While the present disclosure has been described and illustrated with reference to particular embodiments, it will be appreciated by those of ordinary skill in the art that the disclosure lends itself to many different variations not specifically illustrated herein. By way of example only, in a modification of the above apparatus, the second support may include a set of fourth tool halves as well as the second tool halves and third tool halves. In this example, the divider may be shaped so that with the second support oriented with any one of said sets of tool halves in alignment with the first tool halves, one or both of the other sets of tool halves on the second support may be positioned in the tool change area. As another example, whilst the above example has two different types of first tool half, two different types of second tool half, etc., other arrangements may have first tool halves which are all identical to one another and second tool halves which are all identical to one another (whereupon a tool changeover would need to be performed before both male and female mold halves could be produced). As an alternative, other examples may have four different types of first tool halves, four different types of second tool halves, etc., so that complete sets of mold halves for two different shapes of contact lens could be produced at once.

For the avoidance of doubt, the names 'first tool half, 'second tool half etc. should not be construed as having any limitations beyond those recited in the appended claims. There is no intended implication in terms of structure of said tool halves or order of use. For instance, the second tool halves and third tool halves may be identical to one another in some examples, and/or the first use of the apparatus may utilize the third tool halves before the second tool halves. Furthermore, it should be understood that although the apparatus described above has eight first tool halves mounted on the first support (and eight second tool halves and eight third tool halves mounted on the second support), this should not be construed as limiting. In a modification of the apparatus there may be fewer than eight (for instance one, two or four) first tool halves mounted on the first support or there may be more than eight first tool halves mounted on the first support, with a corresponding number of second tool halves (and a corresponding number of third tool halves if applicable) mounted on the second support.

In the foregoing description, where integers or elements are mentioned which have known, obvious or foreseeable equivalents, then such equivalents are herein incorporated as if individually set forth. Reference should be made to the claims for determining the true scope of the present disclosure. It will also be appreciated by the reader that integers or features of the disclosure that are described as preferable, advantageous, convenient, or the like, are optional and do not limit the scope of the independent claims. Moreover, it is to be understood that such optional integers or features, while of possible benefit in some embodiments of the disclosure, may not be desirable, and can therefore be absent, in other embodiments.

## Claims

1. An apparatus (60) for injection molding of contact lens mold halves (2, 4) for use in the manufacture of contact lenses, the apparatus comprising one or more first tool halves (22) mounted on a first support (80), and one or more second tool halves (24) releasably mounted on a second support (82), wherein:
with the second support (82) in an operative orientation, the first (80) and second (82) supports are movable between a closed position in which the first (22) and second (24) tool halves engage one another to provide corresponding mold cavities therebetween, and an open position in which the first (22) and second (24) tool halves are aligned with one another across a part removal gap, **characterized in that**
the second support (82) is movable between the operative orientation, and a reloading orientation in which the second tool halves (24) are located in a tool change area (64) that is out of alignment with the first tool halves (22).

2. The apparatus (60) according to claim 1 wherein the first support (80) and the second support (82) are movable between said open and closed positions along an upright axis.

3. The apparatus (60) according to claim 1 or 2 further comprising one or more third tool halves (96) releasably mounted on the second support (82), wherein with the second support (82) in the reloading orientation the first support (80) and the second support (82) are movable between a further closed position in which the first tool halves (22) and the third tool halves (96) engage one another to provide corresponding mold cavities therebetween, and a further open position in which the first tool halves (22) and the third tool halves (96) are aligned with one another across a part removal gap (84), wherein optionally, with the second support (82) in the operative orientation, the third tool halves (96) are located in the tool change area (64).

4. The apparatus (60) according to claim 3, further comprising one or more fourth tool halves releasably supported on the second support (82).

5. The apparatus (60) according to any preceding claim wherein the first support (80) and second support (82) are movable between the open and closed positions by moving them along a molding axis (88), and the second support (82) is rotatable between the operative and reloading orientations about an axis which is parallel to the molding axis (88).

6. The apparatus (60) according to any preceding claim wherein the second tool half (24) or each second tool half (24) is configured to form an optical surface (52) of said mold half.

7. The apparatus (60) according to any preceding claim further comprising one or more alternative tool halves which are configured to be releasably mounted on the second support (82) in place of the second tool halves (24).

8. A part of an apparatus (60) according to any preceding claim, said part comprising the first support (80), the second support (82), and a drive mechanism for moving the first support (80) and the second support (82) between the open and closed positions and moving the second support (82) between the operative and reloading orientations.

9. A method of injection molding mold halves (2, 4) for use in the manufacture of contact lenses, the method comprising:
moving a second support (82) to an operative orientation, and then moving a first support (80) and the second support (82) to a closed position such that one or more first tool halves (22) supported on the first support (80) and one or more second tool halves (24) releasably supported on the second support (82) engage one another to provide corresponding mold cavities therebetween;
injecting a molten polymer into the mold cavities, then allowing the molten polymer to solidify in the mold cavities and form mold halves (2, 4);
moving the first support (80) and the second support (82) to an open position such that the one or more first tool halves (22) and the one or more second tool halves (24) are aligned with one another across a part removal gap (84);
removing said mold halves (2, 4) through the part removal gap (84);
moving the second support (82) to a reloading orientation in which the one or more second tool halves (24) are located in a tool change area (64) which is out of alignment with the one or more first tool halves (22); and
removing the one or more second tool halves (24) from the second support (82).

10. The method according to claim 9 wherein moving the first support (80) and the second support (82) to the closed position and moving the first support (80) and the second support (82) to the open position each comprises moving the first support (80) and the second support (82) along an upright axis.

11. The method according to claim 9 or 10 wherein the step of moving the second support (82) to the reloading orientation also moves one or more third tool halves (96), which are also releasably supported by the second support (82), into alignment with the one or more first tool halves (22), and the method further comprises:
moving the first support (80) and the second support (82) to a further closed position, with the second support (82) in the reloading orientation, such that the one or more first tool halves (22) and the one or more third tool halves (96) engage one another to provide corresponding mold cavities therebetween;
injecting a molten polymer into the mold cavities, then allowing the molten polymer to solidify in the mold cavities and form additional mold halves;
moving the first support (80) and the second support (82) to a further open position such that the one or more first tool halves (22) and the one or more third tool halves (96) are aligned with one another across a part removal gap (86); and
removing said additional mold halves through the part removal gap (86); wherein optionally, moving the second support (82) to the operative orientation also moves the one or more third tool halves (96) to the tool change area (64); and wherein optionally, the step of moving the second support (82) to the operative orientation also moves one or more fourth tool halves, which are also releasably supported by the second support (82), into the tool change area (64).

12. The method according to any one of claims 9 to 11 wherein:
moving the first support (80) and the second support (82) to the closed position and moving them to the open position each comprises moving the first support (80) and the second support (82) along a molding axis (88); and
moving the second support (82) to the operative orientation and moving the second support (82) to the reloading orientation each comprises rotating the second support (82) about an axis which is parallel to the molding axis (88).

13. The method according to any one of claims 9 to 12 wherein the step of allowing the molten polymer to solidify in the mold cavities and form mold halves (2, 4) comprises allowing some of said molten polymer to solidify against optical surfaces (52) provided by said one or more second tool halves (24) so as to form optical surfaces (52) of said mold halves (2, 4).

14. The method according to any one of claims 9 to claim 13 further comprising the step of replacing the one or more second tool halves (24) removed from the second support (82) with one or more alternative tool halves.

15. A method of manufacturing a contact lens, the method comprising:
injection molding a male mold half (2) and injection molding a female mold half (4), at least one of said mold halves being a mold half injection molded using the apparatus (60) of any one of claims 1 to 8 and/or the method of any one of claims 9 to 15;
engaging the male mold half (2) and the female mold half (4) with one another, with a quantity of a contact lens formulation located in a cavity defined therebetween;
curing the contact lens formulation to form said contact lens; and
separating the male half from the female mold half and removing the contact lens.

## Patentansprüche

1. Vorrichtung (60) zum Spritzgießen von Kontaktlinsenformhälften (2, 4) zur Verwendung bei der Herstellung von Kontaktlinsen, wobei die Vorrichtung eine oder mehrere erste Werkzeughälften (22), die an einem ersten Träger (80) angebracht sind, und eine oder mehrere zweite Werkzeughälften (24) umfasst, die lösbar an einem zweiten Träger (82) angebracht sind, wobei:
wenn sich der zweite Träger (82) in einer operativen Ausrichtung befindet, sind der erste (80) und der zweite (82) Träger zwischen einer geschlossenen Position, in der die ersten (22) und zweiten (24) Werkzeughälften ineinandergreifen, um dazwischen entsprechende Formhohlräume zu bilden, und einer offenen Position beweglich, in der die ersten (22) und zweiten (24) Werkzeughälften über einen Teile-Entfernungsabstand hinweg miteinander ausgerichtet sind,
**dadurch gekennzeichnet, dass**
der zweite Träger (82) zwischen der operativen Ausrichtung und einer Nachladeausrichtung beweglich ist, in der sich die zweiten Werkzeughälften (24) in einem Werkzeugwechselbereich (64) befinden, der nicht mit den ersten Werkzeughälften (22) fluchtet.

2. Vorrichtung (60) nach Anspruch 1, wobei der erste Träger (80) und der zweite Träger (82) entlang einer vertikalen Achse zwischen der offenen und der geschlossenen Position beweglich sind.

3. Vorrichtung (60) nach Anspruch 1 oder 2, die ferner eine oder mehrere dritte Werkzeughälften (96) umfasst, die lösbar an dem zweiten Träger (82) angebracht sind, wobei bei dem zweiten Träger (82) in der Nachladeausrichtung der erste Träger (80) und der zweite Träger (82) zwischen einer weiteren geschlossenen Position, in der die ersten Werkzeughälften (22) und die dritten Werkzeughälften (96) miteinander in Eingriff stehen, um dazwischen entsprechende Formhohlräume zu bilden, und einer weiteren offenen Position beweglich sind, in der die ersten Werkzeughälften (22) und die dritten Werkzeughälften (96) über einen Teile-Entfernungsabstand (84) hinweg ausgerichtet sind, wobei optional wenn sich der zweite Träger (82) in der operativen Ausrichtung befindet, die dritten Werkzeughälften (96) im Werkzeugwechselbereich (64) angeordnet sind.

4. Vorrichtung (60) nach Anspruch 3, die ferner eine oder mehrere vierte Werkzeughälften umfasst, die lösbar an dem zweiten Träger (82) geträgert sind.

5. Vorrichtung (60) nach einem der vorstehenden Ansprüche, wobei der erste Träger (80) und der zweite Träger (82) durch Bewegung entlang einer Formachse (88) zwischen der offenen und der geschlossenen Position beweglich sind, und der zweite Träger (82) um eine Achse, die parallel zur Formachse (88) verläuft, zwischen den operativen und Nachladeausrichtungen drehbar ist.

6. Vorrichtung (60) nach einem der vorstehenden Ansprüche, wobei die zweite Werkzeughälfte (24) oder jede zweite Werkzeughälfte (24) so konfiguriert ist, dass sie eine optische Oberfläche (52) der Formhälfte bildet.

7. Vorrichtung (60) nach einem der vorstehenden Ansprüche, die ferner eine oder mehrere alternative Werkzeughälften umfasst, die so konfiguriert sind, dass sie anstelle der zweiten Werkzeughälften (24) lösbar an dem zweiten Träger (82) angebracht werden können.

8. Teil einer Vorrichtung (60) nach einem der vorstehenden Ansprüche, wobei das Teil den ersten Träger (80), den zweiten Träger (82) und einen Antriebsmechanismus zum Bewegen des ersten Trägers (80) und des zweiten Trägers (82) zwischen der offenen und der geschlossenen Position und zum Bewegen des zweiten Trägers (82) zwischen der operativen Ausrichtung und der Nachladeausrichtung umfasst.

9. Verfahren zum Spritzgießen von Formhälften (2, 4) zur Verwendung bei der Herstellung von Kontaktlinsen, wobei das Verfahren umfasst:
Bewegen eines zweiten Trägers (82) in eine operative Ausrichtung und anschließend Bewegen eines ersten Trägers (80) und des zweiten Trägers (82) in eine geschlossene Position, so dass eine oder mehrere erste Werkzeughälften (22), die auf dem ersten Träger (80) gelagert sind, und eine oder mehrere zweite Werkzeughälften (24), die lösbar auf dem zweiten Träger (82) gelagert sind, ineinandergreifen, um dazwischen entsprechende Formhohlräume zu bilden;
Einspritzen eines geschmolzenen Polymers in die Formhohlräume, anschließendes Erstarrenlassen des geschmolzenen Polymers in den Formhohlräumen und Ausbilden von Formhälften (2, 4);
Bewegen der ersten Trägers (80) und des zweiten Trägers (82) in eine geöffnete Position, so dass die eine oder mehreren ersten Werkzeughälften (22) und die eine oder mehreren zweiten Werkzeughälften (24) über einen Teile-Entfernungsabstand (84) hinweg ausgerichtet sind;
Entfernen der Formhälften (2, 4) durch den Teile-Entfernungsabstand (84);
Bewegen des zweiten Trägers (82) in eine Nachladungsausrichtung, in der die eine oder die mehreren zweiten Werkzeughälften (24) in einem Werkzeugwechselbereich (64) angeordnet sind, der nicht mit der einen oder den mehreren ersten Werkzeughälften (22) ausgerichtet ist; und
Entfernen der einen oder mehreren zweiten Werkzeughälften (24) von dem zweiten Träger (82).

10. Verfahren nach Anspruch 9, wobei das Bewegen des ersten Trägers (80) und des zweiten Trägers (82) in die geschlossene Position und das Bewegen des ersten Trägers (80) und des zweiten Trägers (82) in die offene Position jeweils das Bewegen des ersten Trägers (80) und des zweiten Trägers (82) entlang einer vertikalen Achse umfasst.

11. Verfahren nach Anspruch 9 oder 10, wobei der Schritt des Bewegens des zweiten Trägers (82) in die Nachladeausrichtung auch eine oder mehrere dritte Werkzeughälften (96), die ebenfalls lösbar von dem zweiten Träger (82) gehalten werden, in Ausrichtung mit der einen oder den ersten Werkzeughälften (22) bewegt, und das Verfahren ferner umfasst:
Bewegen des ersten Trägers (80) und des zweiten Trägers (82) in eine weitere geschlossene Position, wobei sich der zweite Träger (82) in der Nachladungsausrichtung befindet, so dass die eine oder mehreren ersten Werkzeughälften (22) und die eine oder mehreren dritten Werkzeughälften (96) ineinandergreifen, um dazwischen entsprechende Formhohlräume zu bilden;
Einspritzen eines geschmolzenen Polymers in die Formhohlräume, anschließendes Erstarrenlassen des geschmolzenen Polymers in den Formhohlräumen und Ausbilden zusätzlicher Formhälften;
Bewegen des ersten Trägers (80) und des zweiten Trägers (82) in eine weitere geöffnete Position, so dass die eine oder mehreren ersten Werkzeughälften (22) und die eine oder mehreren dritten Werkzeughälften (96) über einen Teileentnahmespalt (86) hinweg miteinander ausgerichtet sind; und
Entfernen der zusätzlichen Formhälften durch den Teilentnahmespalt (86); wobei optional das Bewegen des zweiten Trägers (82) in die operative Ausrichtung auch die eine oder mehreren dritten Werkzeughälften (96) in den Werkzeugwechselbereich (64) bewegt; und wobei optional der Schritt des Bewegens des zweiten Trägers (82) in die operative Ausrichtung auch eine oder mehrere vierte Werkzeughälften, die ebenfalls lösbar von dem zweiten Träger (82) gehalten werden, in den Werkzeugwechselbereich (64) bewegt.

12. Verfahren nach einem der Ansprüche 9 bis 11, wobei
das Bewegen des ersten Trägers (80) und des zweiten Trägers (82) in die geschlossene Position und das Bewegen derselben in die offene Position jeweils das Bewegen des ersten Trägers (80) und des zweiten Trägers (82) entlang einer Formachse (88) umfasst; und
das Bewegen des zweiten Trägers (82) in die operative Ausrichtung und das Bewegen des zweiten Trägers (82) in die Nachladeausrichtung jeweils das Drehen der zweiten Träger (82) um eine Achse umfasst, die parallel zur Formachse (88) verläuft.

13. Verfahren nach einem der Ansprüche 9 bis 12, wobei der Schritt des Erstarrenlassens des geschmolzenen Polymers in den Formhohlräumen und Bilden von Formhälften (2, 4) umfasst, dass ein Teil des geschmolzenen Polymers an den durch die eine oder mehreren zweiten Werkzeughälften (24) bereitgestellten optischen Oberflächen (52) erstarrt, um optische Oberflächen (52) der Formhälften (2, 4) zu bilden.

14. Verfahren nach einem der Ansprüche 9 bis 13, das ferner den Schritt umfasst, die eine oder mehreren zweiten Werkzeughälften (24), die von der zweiten Träger (82) entfernt wurden, durch eine oder mehrere alternative Werkzeughälften zu ersetzen.

15. Verfahren zur Herstellung einer Kontaktlinse, wobei das Verfahren umfasst:
Spritzgießen einer männlichen Formhälfte (2) und Spritzgießen einer weiblichen Formhälfte (4), wobei mindestens eine der Formhälften eine Formhälfte ist, die unter Verwendung der Vorrichtung (60) nach einem der Ansprüche 1 bis 8 und/oder des Verfahrens nach einem der Ansprüche 9 bis 15 spritzgegossen wurde;
Eingreifen der männlichen Formhälfte (2) und der weiblichen Formhälfte (4) ineinander, wobei sich eine Menge einer Kontaktlinsenformulierung in einem zwischen ihnen definierten Hohlraum befindet;
Aushärten der Kontaktlinsenformulierung, um die Kontaktlinse zu bilden; und
Trennen der männlichen Hälfte von der weiblichen Formhälfte und Entnehmen der Kontaktlinse.

## Revendications

1. Appareil (60) de moulage par injection de moitiés de moule de lentilles de contact (2, 4) pour la fabrication de lentilles de contact, l'appareil comprenant au moins une première moitié d'outil (22) montée sur un premier support (80) et au moins une deuxième moitié d'outil (24) montée de façon amovible sur un second support (82), dans lequel :
avec le second support (82) dans une orientation opératoire, le premier support (80) et le second support (82) sont mobiles entre une position fermée, dans laquelle les premières (22) et deuxièmes (24) moitiés d'outil s'assemblent les unes avec les autres pour fournir des cavités de moule correspondantes entre elles, et une position ouverte, dans laquelle les premières (22) et deuxièmes (24) moitiés d'outil sont alignées les unes sur les autres de part et d'autre d'un espace d'extraction de pièce, **caractérisé en ce que** le second support (82) est mobile entre l'orientation opératoire et une orientation de rechargement, dans laquelle les deuxièmes moitiés d'outil (24) sont situées dans une zone de changement d'outil (64) désalignée avec les premières moitiés d'outils (22).

2. Appareil (60) selon la revendication 1, dans lequel le premier support (80) et le second support (82) sont mobiles entre lesdites positions ouvertes et fermées le long d'un axe vertical.

3. Appareil (60) selon la revendication 1 ou 2, comprenant en outre au moins une troisième moitié d'outil (96) montée de façon amovible sur le second support (82) dans lequel, avec le second support (82) en orientation de rechargement, le premier support (80) et le second support (82) sont mobiles entre une autre position fermée, dans laquelle les premières (22) et troisièmes (96) moitiés d'outil s'assemblent les unes avec les autres pour fournir des cavités de moule correspondantes entre elles, et une autre position ouverte, dans laquelle les premières (22) et troisièmes (96) moitiés d'outil sont alignées les unes sur les autres de part et d'autre d'un espace d'extraction de pièce (84), où facultativement, avec le second support (82) en orientation opératoire, les troisièmes moitiés d'outil (96) sont situées dans la zone de changement d'outil (64).

4. Appareil (60) selon la revendication 3, comprenant en outre au moins une quatrième moitié d'outil supportée de façon amovible par le second support (82).

5. Appareil (60) selon l'une quelconque des revendications précédentes, dans lequel le premier support (80) et le second support (82) sont mobiles entre les positions ouvertes et fermées en les déplaçant le long d'un axe de moulage (88), et on peut faire tourner le second support (82) entre les orientations opératoire et de rechargement autour d'un axe qui est parallèle à l'axe de moulage (88).

6. Appareil (60) selon l'une quelconque des revendications précédentes, dans lequel la deuxième moitié d'outil (24) ou chaque deuxième moitié d'outil (24) est configurée pour former une surface optique (52) de ladite moitié d'outil.

7. Appareil (60) selon l'une quelconque des revendications précédentes, comprenant en outre des moitiés d'outil alternatives configurées pour être montées de façon amovible sur le second support (82) à la place des deuxièmes moitiés d'outil (24).

8. Partie d'un appareil (60) selon l'une quelconque des revendications précédentes, ladite partie comprenant le premier support (80), le second support (82) et un mécanisme d'entraînement pour déplacer le premier support (80) et le second support (82) entre les positions ouvertes et fermées et pour déplacer le second support (82) entre les orientations opératoire et de rechargement.

9. Procédé de moulage par injection de moitiés de moule (2, 4) pour utilisation dans la fabrication de lentilles de contact, le procédé comprenant de :
déplacer un second support (82) dans une orientation opératoire, puis déplacer un premier support (80) et le second support (82) dans une position fermée, de sorte qu'au moins une première moitié d'outil (22) supportée par le premier support (80) et au moins une deuxième moitié d'outil (24) supportée de façon amovible par le second support (82) s'assemblent les unes avec les autres pour fournir des cavités de moule correspondantes entre elles ;
injecter un polymère fondu dans les cavités de moule, puis laisser le polymère fondu se solidifier dans les cavités de moulage pour former des moitiés de moule (2, 4) ;
déplacer le premier support (80) et le second support (82) dans une position ouverte, de sorte que les au moins une première moitié d'outil (22) et les au moins une deuxième moitié d'outil (24) soient alignées les unes sur les autres de part et d'autre d'un espace d'extraction de pièce (84) ;
enlever lesdites moitiés de moule (2, 4) à travers l'espace d'extraction de pièce (84) ;
déplacer le second support (82) dans une orientation de rechargement, dans laquelle les au moins une deuxième moitié d'outil (24) sont situées dans une zone de changement d'outil (64) désalignée par rapport à l'au moins une première moitié d'outil (22) ; et
enlever les au moins une deuxième moitié d'outil (24) du second support (82).

10. Procédé selon la revendication 9, dans laquelle déplacer le premier support (80) et le second support (82) en position fermée et déplacer le premier support (80) et le second support (82) en position ouverte comprend chacun de déplacer le premier support (80) et le second support (82) le long d'un axe vertical.

11. Procédé selon la revendication 9 ou 10, dans lequel l'étape de déplacement du second support (82) dans une orientation de rechargement déplace également au moins une troisième moitié d'outil (96) qui est également supportée de façon amovible par le second support (82) alignée par rapport à l'au moins une première moitié d'outil (22), et le procédé comprend en outre de :
déplacer le second support (80) et le second support (82) dans une autre position fermée, avec le second support (82) en orientation de rechargement, de sorte que les au moins une première moitié d'outil (22) et les au moins une troisième moitié d'outil (96) s'assemblent les unes avec les autres pour fournir des cavités de moule correspondantes entre elles ;
injecter un polymère fondu dans les cavités de moule, puis laisser le polymère fondu se solidifier dans les cavités de moule pour former des moitiés de moule supplémentaires ;
déplacer le premier support (80) et le second support (82) dans une autre position ouverte, de sorte que les au moins une première moitié d'outil (22) et les au moins une troisième moitié d'outil (96) soient alignées les unes sur les autres de part et d'autre d'un espace d'extraction de pièce (86) ; et
enlever lesdites moitiés de moule supplémentaires à travers l'espace d'extraction de pièce (86) ; où facultativement déplacer le second support (82) dans l'orientation opératoire déplace également l'au moins une troisième moitié d'outil (96) dans la zone de changement d'outil (64) ; et où facultativement l'étape de déplacement du second support (82) dans la direction opératoire déplace également au moins une quatrième moitié d'outil qui est également alignée supportée de façon amovible par le second support (82) dans la zone de changement d'outil (64).

12. Procédé selon l'une quelconque des revendications 9 à 11, dans lequel :
déplacer le premier support (80) et le second support (82) en position fermée et les déplacer en position ouverte comprend chacun de déplacer le premier support (80) et le second support (82) le long d'un axe de moulage (88) ; et
déplacer le second support (82) en orientation opératoire et déplacer le second support (82) en orientation de rechargement comprend chacun de faire tourner le second support (82) autour d'un axe parallèle à l'axe de moulage (88).

13. Procédé selon l'une quelconque des revendications 9 à 12, dans lequel l'étape consistant à laisser le polymère fondu se solidifier dans les cavités de moule et former des moitiés de moule (2, 4) comprend de laisser ledit polymère fondu se solidifier contre des surfaces optiques (52) fournies par lesdites première et deuxième moitié d'outil (24) de façon à former des surfaces optiques (52) desdites moitiés de moule (2, 4).

14. Procédé selon l'une quelconque des revendications 9 à 13, comprenant en outre l'étape consistant à remplacer l'au moins une deuxième moitié d'outil (24) enlevée du second support (82) par au moins une moitié d'outil alternative.

15. Procédé de fabrication d'une lentille de contact, le procédé comprenant de :
mouler par injection une moitié de moule mâle (2) et mouler par injection une moitié de moule femelle (4), au moins l'une desdites moitiés de moule étant une moitié de moule moulée par injection en utilisant l'appareil (60) selon l'une quelconque des revendications 1 à 8 et/ou le procédé selon l'une quelconque des revendications 9 à 15 ;
assembler la moitié de moule mâle (2) et la moitié de moule femelle (4) l'une dans l'autre, avec une quantité de formulation de lentille de contact située dans une cavité définie entre elles ;
polymériser la formulation de lentille de contact pour former ladite lentille de contact ; et
séparer la moitié mâle de la moitié femelle et enlever la lentille de contact.
